# FASCICULE DE BREVET EUROPEEN

(11) **EP 3 075 059 B1**
(45) Date de publication et mention de la délivrance du brevet: **13.03.2019**
(21) Numéro de dépôt: 14802880.6
(22) Date de dépôt: 25.11.2014
(51) Int. Cl.: H02J 7/34, H02M 3/335, H02J 1/00, H02J 1/10

(54) **DISPOSITIF ET PROCEDE DE CONVERSION CONTINU-CONTINU REVERSIBLE PERMETTANT UN ECHANGE D'ENERGIE ENTRE DEUX RESEAUX ELECTRIQUES A COURANT CONTINU**
VORRICHTUNG UND VERFAHREN FÜR GLEICHSTROM/GLEICHSTROM-REVERSIBLE UMWANDLUNG ZUM ENERGIEAUSTAUSCH ZWISCHEN ZWEI GLEICHSTROMNETZEN
DEVICE AND METHOD FOR DC/DC REVERSIBLE CONVERSION ALLOWING AN EXCHANGE OF ENERGY BETWEEN TWO DC ELECTRIC NETWORKS

(30) Priorité: 27.11.2013 FR 1361681
(43) Date de publication de la demande: 05.10.2016
(73) Titulaire: General Electric Technology GmbH, 5400 Baden (CH)
(72) Inventeur: GARCIA SOTO, Guillermo, F-91300 Massy (FR)
(74) Mandataire: Fischer, Michael Maria
(86) Numéro de dépôt international: PCT/EP2014/075474
(87) Numéro de publication internationale: WO 2015/078838

(56) Documents cités:
- EP-A2- 0 260 825
- EP-A2- 0 429 315
- WO-A1-03/092148
- DE-U1-202011 001 122
- US-A1- 2013 003 424
- HAIFENG FAN ET AL: "A novel phase-shift bidirectional DC-DC converter with an extended high-efficiency range for 20 kVA solid state transformer", ENERGY CONVERSION CONGRESS AND EXPOSITION (ECCE), 2010 IEEE, IEEE, PISCATAWAY, NJ, USA, 12 septembre 2010 (2010-09-12), pages 3870-3876, XP031786992, ISBN: 978-1-4244-5286-6

## Description

### DOMAINE TECHNIQUE

L'invention concerne un dispositif et un procédé de conversion continu-continu réversible à grand rapport de transformation permettant un échange d'énergie entre deux réseaux électriques, à courant continu (CC).

### ÉTAT DE LA TECHNIQUE ANTÉRIEURE

Les réseaux électriques à courant continu (CC ou DC) peuvent représenter une alternative efficace aux réseaux à courant alternatif (CA ou AC) conventionnels. L'essentiel pour développer un système de distribution à courant continu est de proposer une fonction équivalente aux transformateurs courant alternatif. Les convertisseurs continu-continu présentent une alternative à cette fonction en permettant une connexion à différents réseaux électriques à courant continu de différentes tensions.

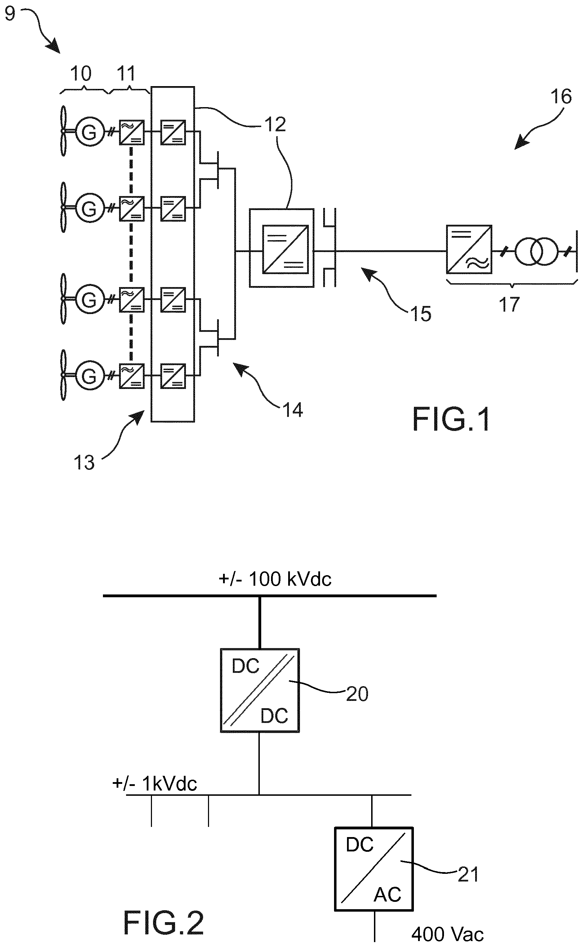

Dans un premier exemple, illustré sur la figure 1, dans le cas d'un réseau électrique à courant continu pour ferme éolienne « offshore » (située au large), on utilise un convertisseur unidirectionnel élévateur afin de relier la tension des éoliennes à un réseau HVDC (« High Voltage Direct Current » ou « haute tension courant continu ») et d'exporter l'énergie. Sur cette figure, du côté mer 9 sont représentées des éoliennes 10, des convertisseurs alternatif-continu 11, des convertisseurs continu-continu élévateurs 12. Les trois niveaux basse tension courant continu 13, moyenne tension courant continu 14, haute tension courant continu 15 sont également représentés. Du côté rivage 16, est représenté le réseau HVDC 17.

Dans un second exemple, illustré sur la figure 2, la distribution à courant continu d'un réseau haute tension (+100 kilovolts DC) vers un réseau basse tension (+ 1 kilovolt DC) nécessite d'utiliser un convertisseur continu-continu bidirectionnel 20, qui est élévateur (décharge) et abaisseur (charge). Un convertisseur continu-alternatif (DC-AC) 21 est également représenté.

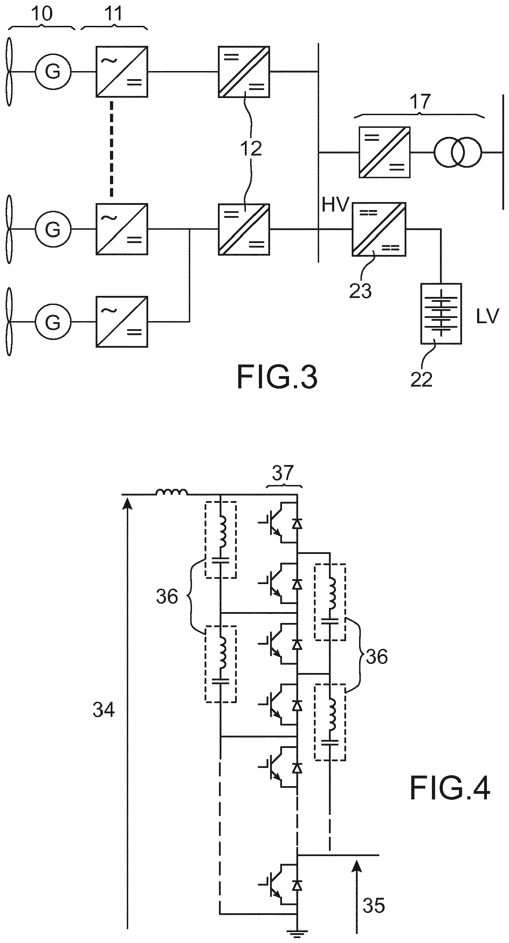

La figure 3 illustre un stockage 22 connecté à un réseau électrique à courant continu à travers des convertisseurs continu-continu bidirectionnels 23, les éléments analogues à ceux de la figure 1 gardant les mêmes références.

Mais les topologies à convertisseurs continu-continu présentent les limitations suivantes qui interdisent leur utilisation pour des applications haute tension, haute puissance :
- Les semiconducteurs de puissance ont des rendements limités.
- La modulation à largeur d'impulsion (PWM) nécessite des cycles opératoires extrêmes à grand rapport de conversion, ce qui entraîne une diminution de l'efficacité et quelquefois des mauvais fonctionnements dus à des temps de conduction très courts.

- Le réseau de distribution à courant continu nécessite une isolation galvanique pour des raisons de sécurité.
- L'utilisation d'un transformateur dans un convertisseur continu-continu haute puissance peut être limitée par les rapports dV/dt ou dA/dt, conduisant à une élévation importante des pertes dans les matériaux magnétiques.
- La combinaison d'un nombre de tours élevé et d'une isolation haute tension dans un transformateur augmente l'inductance de fuite et la capacité parasite de l'enroulement, ce qui conduit à des oscillations et à un rapport dA/dt élevé.
- La combinaison d'un rapport de transformation haute puissance haute tension et d'une fréquence élevée fait de la fabrication d'un transformateur continu-continu un challenge technologique.

Les convertisseurs continu-continu de l'art antérieur peuvent être classés en trois catégories principales :

### 1. Des convertisseurs continu-continu sans transformateur d'isolation.

De tels convertisseurs sont décrits dans les documents référencés [1] et [2] en fin de description, comme illustré sur la figure 4. Sur cette figure sont représentés un premier système courant continu 34, un second système courant continu 35, des circuits résonants 36 et des étapes convertisseurs 37. Un tel convertisseur est réalisé sans transformateur. Il n'assure donc aucune isolation galvanique entre la partie transmission et la ligne de distribution. La solution proposée dans le document référencé [1] est relativement volumineuse parce que la fréquence de hachage, limitée à plusieurs centaines de Hertz nécessite de gros composants réactifs. De plus, le rapport de transformation de tension est relativement faible (aux environs de 10).

### 2. Des convertisseurs continu-continu modulaires avec transformateur distribué.

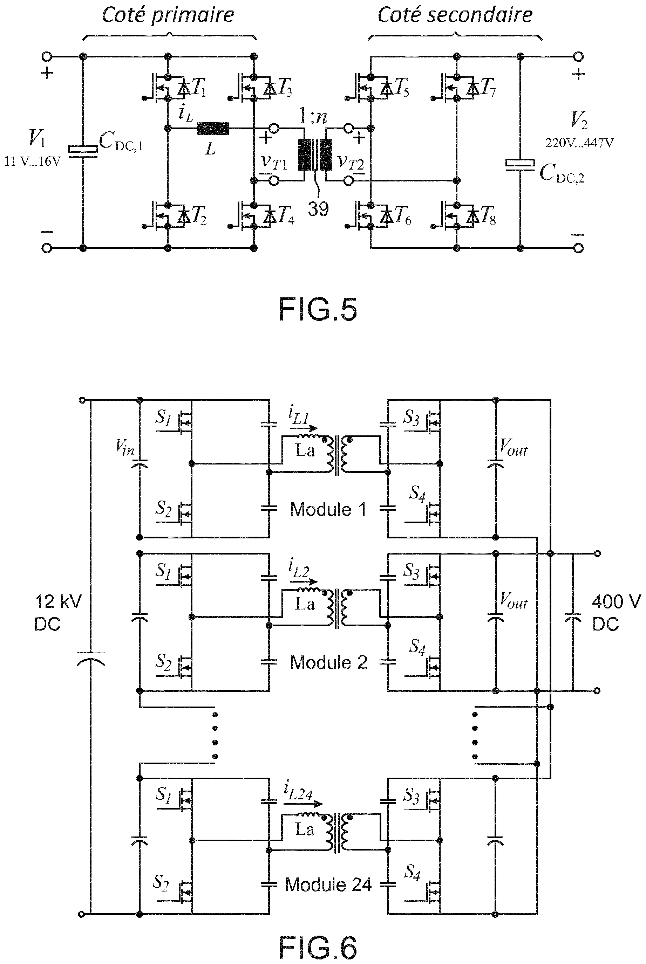

Comme décrit dans les documents référencés [3] et [5], des exemples de réalisation sont illustrés sur les figures 5 et 6. Le principe de tels convertisseurs est basé sur une connexion des modules 38 en parallèle ou en série. Les modules sont construits avec pont double, complet ou moitié, symétrique. Le transfert d'énergie est réalisé par commande de déphasage en chargeant ou déchargeant une inductance. Chaque module présentant une puissance relative modérée, par exemple des centaines de kilowatt (kW), le transformateur 39 est construit avec des matériaux magnétiques haute fréquence permettant l'utilisation de hautes fréquences, jusqu'à plusieurs centaines de kiloHertz. Une telle solution est très compacte et de taille variable. Mais elle nécessite un grand nombre d'éléments supplémentaires parce que les composants du côté primaire et du côté secondaire, à savoir les pilotes de grille, les circuits de mesure, les circuits de commande entraînent une diminution de la fiabilité et une augmentation du coût. Un autre inconvénient réside en la dégradation des performances (faible taux de charge).

### 3. Des convertisseurs continu-continu autonome avec un transformateur continu-continu centralisé.

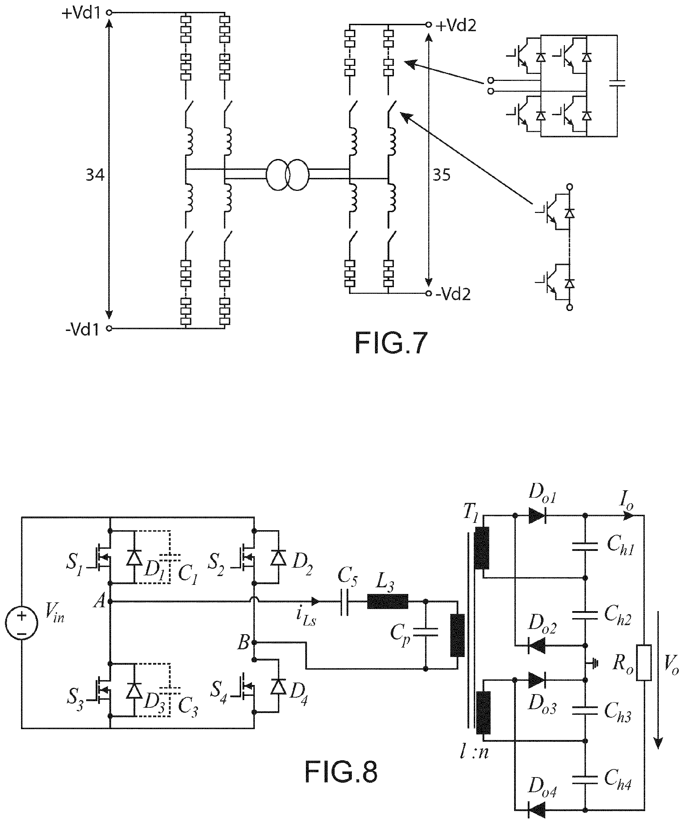

Comme décrit dans les documents référencés [2] et [5] et comme illustré sur la figure 7, ces convertisseurs sont basés sur un transformateur une pièce, qui assure une isolation galvanique. Mais un tel transformateur haute puissance, haute fréquence, qui est volumineux, n'est pas de technologie courante. De plus, le rapport de conversion en haute tension complique la réalisation de ce transformateur, qui doit être particulier pour chaque situation et non modulaire. Enfin, l'utilisation de matériaux magnétiques standards Fe-Si risque d'entraîner des pertes additionnelles à cause de la haute fréquence (environ 500 Hz).

Le document référencé [4] décrit un convertisseur résonant série bien connu utilisé dans un convertisseur unidirectionnel élévateur continu-continu pour la génération de rayons X, qui est illustré sur la figure 8. Une telle solution assure une isolation galvanique. Du fait de convertisseurs de type ZVS («zéro voltage switching») et ZCS («zéro current switching»), les pertes de commutation sont relativement faibles ce qui permet une utilisation jusqu'à des centaines de kiloHertz. Mais une telle solution qui est basée sur un transformateur centralisé est de réalisation difficile pour des hautes puissances de l'ordre du mégaWatt. Une telle solution est avantageuse du fait de son caractère très compact et de faible nombre de composants du côté basse tension. Mais elle présente une performance détériorée pour un rapport de faible charge.

L'invention a pour objet un dispositif et un procédé de conversion continu-continu réversible à grand rapport de transformation permettant un échange d'énergie entre deux réseaux électriques, à courant continu, permettant de résoudre les problèmes techniques posés par les dispositifs de l'art antérieur analysés ci-dessus.

Le document EP 0 260 825 A2 (VARIAN ASSOCIATES [US]) 23 mars 1988, divulgue un dispositif de conversion continu-continu permettant un échange d'énergie entre deux réseaux électriques, à courant continu, qui est asymétrique et comporte plusieurs modules convertisseurs du côté haute tension, et un module convertisseur du côté basse tension basé sur une boucle de courant à plusieurs noyaux magnétiques.

### EXPOSÉ DE L'INVENTION

L'invention est définie par les caractéristiques du dispositif de la revendication 1 et de la méthode de la revendication 8 correspondante. Les revendications dépendantes décrivent des modes de réalisation avantageux de l'invention.

Le dispositif de l'invention présente les avantages suivants :
- C'est une solution asymétrique permettant un choix optimal des composants pour les côtés basse tension et haute tension, séparément.
- Le circuit du côté basse tension est un circuit simple.
- Le circuit du côté haute tension est un circuit modulaire, compact et adaptable permettant la mise en série des modules.
- L'ensemble permet un rapport de conversion adapté à la haute tension.
- Le dispositif de l'invention peut être élévateur, abaisseur ou bidirectionnel.
- Le dispositif de l'invention présente une forte fiabilité parce que le côté basse tension comporte peu de composants. Le convertisseur basse tension, qui est dissocié des convertisseurs haute tension, peut travailler avec plusieurs modules côté haute tension.
- Le dispositif de l'invention est de faible coût du fait :
   - du faible nombre de circuits auxiliaires côté primaire,
   - de l'utilisation d'un côté haute tension distribué, adaptable ne présentant pas le problème de transformateurs centralisés, qui nécessitent, comme analysé précédemment, une fréquence élevée et une puissance élevée avec isolation tension élevée.

### BRÈVE DESCRIPTION DES DESSINS

La figure 1 illustre un réseau d'extraction de ferme éolienne à courant continu de l'art antérieur construit à partir d'un convertisseur élévateur continu-continu.
La figure 2 illustre un réseau de distribution à courant continu de l'art antérieur connecté à un réseau de transmission à travers un convertisseur abaisseur continu-continu.
La figure 3 illustre un dispositif de stockage de l'art antérieur connecté à un réseau électrique à courant continu à travers un convertisseur bidirectionnel continu-continu.
La figure 4 illustre un convertisseur continu-continu de l'art antérieur sans transformateur.
La figure 5 illustre un convertisseur continu-continu à double pont de déphasage de l'art antérieur.
La figure 6 illustre un convertisseur continu-continu modulaire de l'art antérieur.
Les figures 7 et 8 illustrent deux autres convertisseurs continu-continu de l'art antérieur.
La figure 9 illustre un dispositif de conversion continu-continu selon l'invention, comprenant un côté primaire et un côté secondaire comportant plusieurs modules.
La figure 10 illustre un exemple de module côté secondaire du convertisseur continu-continu de l'invention.
La figure 11 illustre le concept du dispositif de conversion continu-continu selon l'invention basé sur un transformateur à courant à plusieurs noyaux.
Les figures 12 à 14 illustrent le fonctionnement du dispositif de conversion de l'invention.
La figure 15 illustre un premier exemple de réalisation du dispositif de conversion de l'invention.
La figure 16 illustre un second exemple de réalisation du dispositif de conversion continu-continu de l'invention avec un transformateur à deux noyaux de deux enroulements chacun.
La figure 17 illustre un troisième exemple de réalisation du dispositif de conversion continu-continu déphaseur selon l'invention avec deux noyaux de trois enroulements chacun.

### EXPOSÉ DÉTAILLÉ DE MODES DE RÉALISATION PARTICULIERS

Dans la présente description, des éléments analogues entre eux sont représentés avec la même référence.

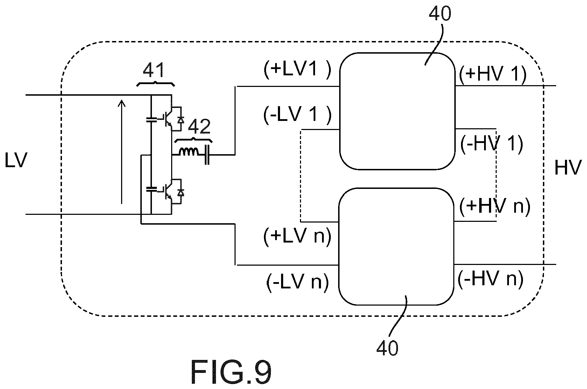

L'invention concerne un dispositif de conversion continu-continu asymétrique illustré sur la figure 9, comprenant plusieurs, ici deux, modules convertisseurs basse tension DC-haute tension DC 40 du côté haute tension (HV) et seul module convertisseur du côté basse tension (LV) 41 basé sur un transformateur à plusieurs noyaux magnétiques. Le transfert d'énergie est réalisé à travers un élément d'accumulation d'énergie 42, circuit résonant ou une inductance, situé du côté basse tension. Les convertisseurs 40 du côté haute tension permettent d'obtenir plusieurs de mégaWatt (MW) et une gamme de l'ordre du mégaVolt (MV). Ils sont synchronisés afin de pouvoir commuter en même temps et éviter tout signal impulsionnel.

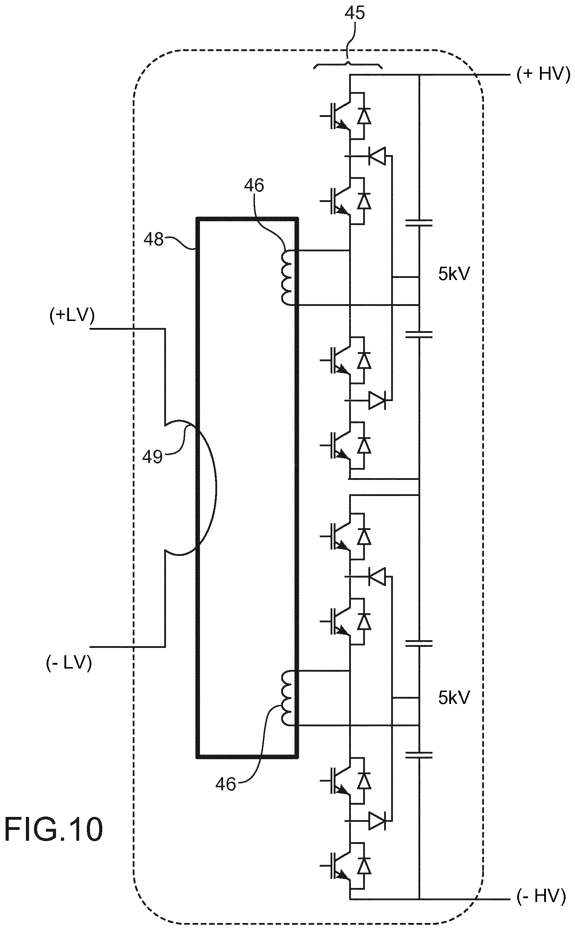

La figure 10 illustre un exemple de réalisation d'un module convertisseur continu-continu 40 de l'invention. Des étages convertisseurs 45 sont reliés à des enroulements 46 disposés autour d'un noyau magnétique 48, un enroulement basse tension 49 étant également disposé autour de ce noyau magnétique du côté basse tension.

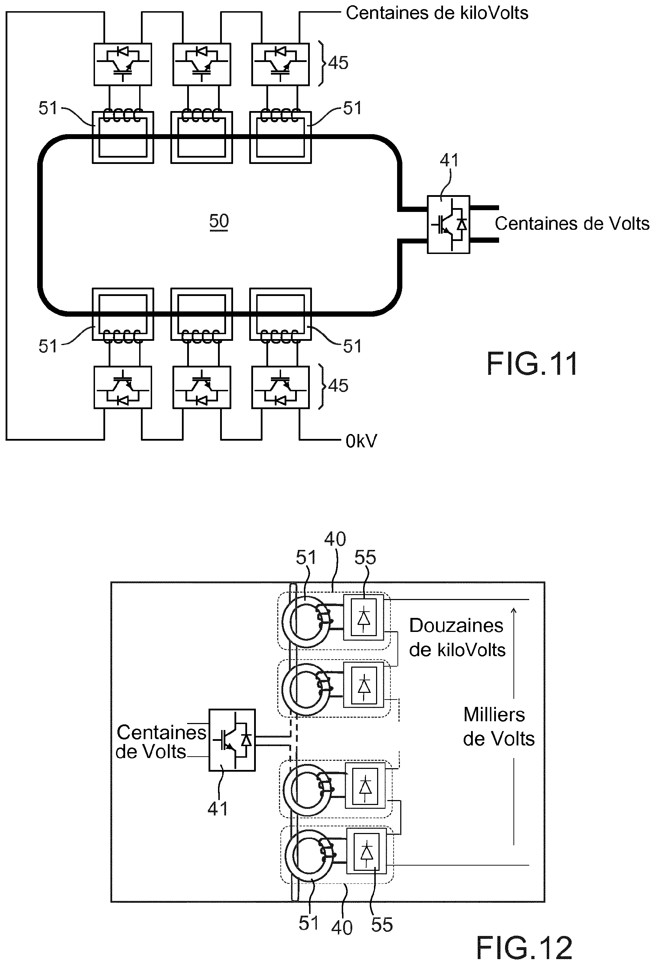

La figure 11 illustre le concept de convertisseur continu-continu de l'invention qui est basé sur un transformateur 50 à plusieurs noyaux magnétiques 51. Du fait de la faible puissance relative de chaque module du côté haute tension, par exemple des centaines de kiloWatt (kW), le transformateur 50 peut être réalisée en un matériau haute fréquence (plusieurs kiloHertz (kHz)), ce qui permet d'obtenir une solution compacte. La section de chaque étage transformateur est choisie afin de ne nécessiter qu'un ou deux enroulements du côté basse tension. La liaison entre étages transformateurs est ainsi facile à réaliser.

Dans un dispositif élévateur, comme par exemple pour un convertisseur d'éolienne, illustré sur la figure 12, les modules convertisseurs 40 comprennent des redresseurs à diode 55. Une telle solution est peu chère et peu complexe parce qu'il y a un seul étage convertisseur du côté basse tension. Le contrôle d'un tel dispositif élévateur unidirectionnel est comparable à un simple convertisseur résonant ou déphaseur ou à un pont « boost ». Les modules convertisseurs 40 ne nécessitent aucun contrôle parce qu'ils comprennent des redresseurs à diode 50.

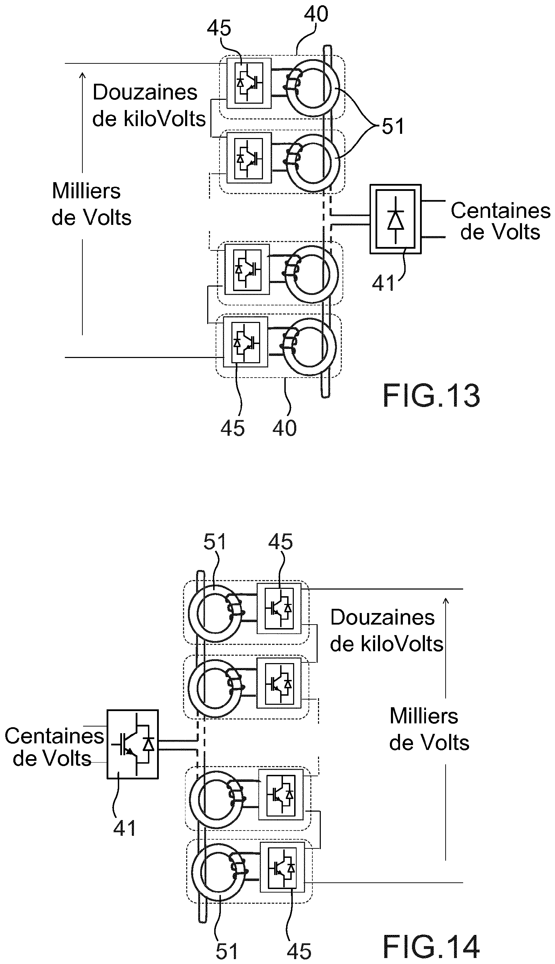

Dans un dispositif abaisseur, comme par exemple dans un réseau électrique à courant continu de distribution illustré sur la figure 13, le module 41 comprend un redresseur basse tension. La commande de l'abaissement unidirectionnel nécessite une synchronisation des modules convertisseurs 40. La commande est comparable à un convertisseur résonant ou à un déphaseur mais tous les modules commutent simultanément. Le convertisseur 41 ne nécessite aucune commande parce c'est un simple redresseur à diode.

Dans un dispositif bidirectionnel, comme illustré sur la figure 14, on peut intégrer un stockage basse tension dans le réseau courant continu haute tension. Dans ce cas il y a deux modes de fonctionnement :
- Il y a transfert d'énergie de la basse tension vers la haute tension. Dans ce cas seul le côté basse tension est commandé comme un « boost » résonant ou un déphaseur, et les modules convertisseurs 40 se comportent comme des redresseurs à diode.
- Il y a transfert d'énergie de la haute tension vers la basse tension. Dans ce cas les modules convertisseurs 40 sont commandés simultanément avec une commande résonante ou déphasée tandis que le module 41 se comporte comme un redresseur.

### Description détaillée de plusieurs exemples de réalisation

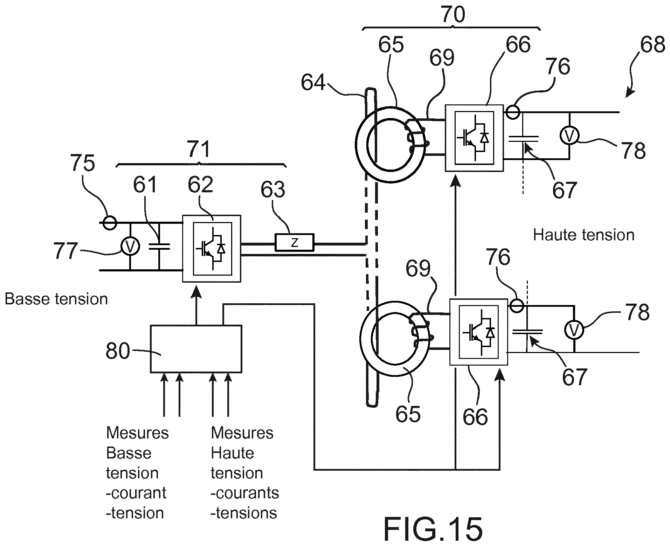

Un premier exemple de réalisation, illustré sur la figure 15, comporte les éléments suivants :
- un condensateur d'entrée 61 ;
- un convertisseur 71 côté basse tension, avec des étages convertisseurs 62 deux niveaux à demi-pont ou pont complet, ou trois niveaux à demi-pont ou pont complet,

- un élément d'accumulation d'énergie 63, circuit LC résonant ou inductance ;
- un enroulement 64 servant comme boucle de courant côté basse tension ;
- plusieurs convertisseurs 70 côté haute tension comprenant chacun :
   - un noyau magnétique 65 traversé par la boucle de courant,
   - un enroulement secondaire 69,
   - un étage convertisseur 66 doubleur deux, trois ou cinq niveaux,
   - un ensemble condensateur 67,
- des réceptacles et câbles haute tension 68.

Sur la figure 15, sont également représentés :
- les capteurs de mesure tension 77 et 78 et de courant 75 et 76 de chaque module de la partie basse tension et de la partie haute tension
- les signaux de commande pour les modules haute tension et basse tension
- l'unité de contrôle 80 qui commande l'arrivée de mesures et le départ de ces signaux de commande.

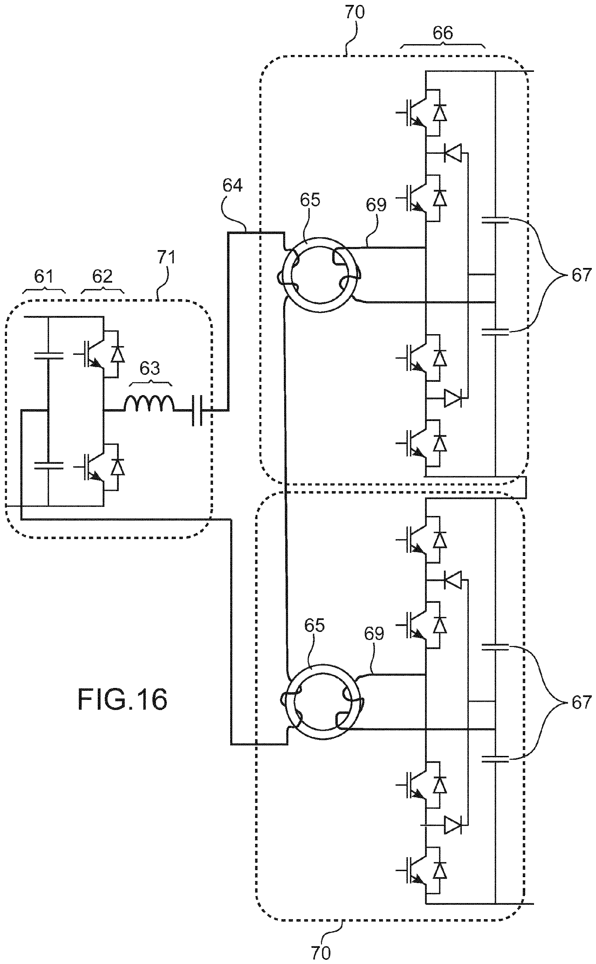

Dans un second exemple de réalisation, illustré sur la figure 16, le convertisseur de l'invention comprend un étage convertisseur résonant ZVS (« zéro voltage switching » ou commutation tension zéro) 62, un circuit 63 résonant, des modules convertisseurs haute tension 70 formant un doubleur deux niveaux, ou un doubleur trois niveaux, et un transformateur à deux noyaux 65 de deux enroulements 64 et 69 chacun.

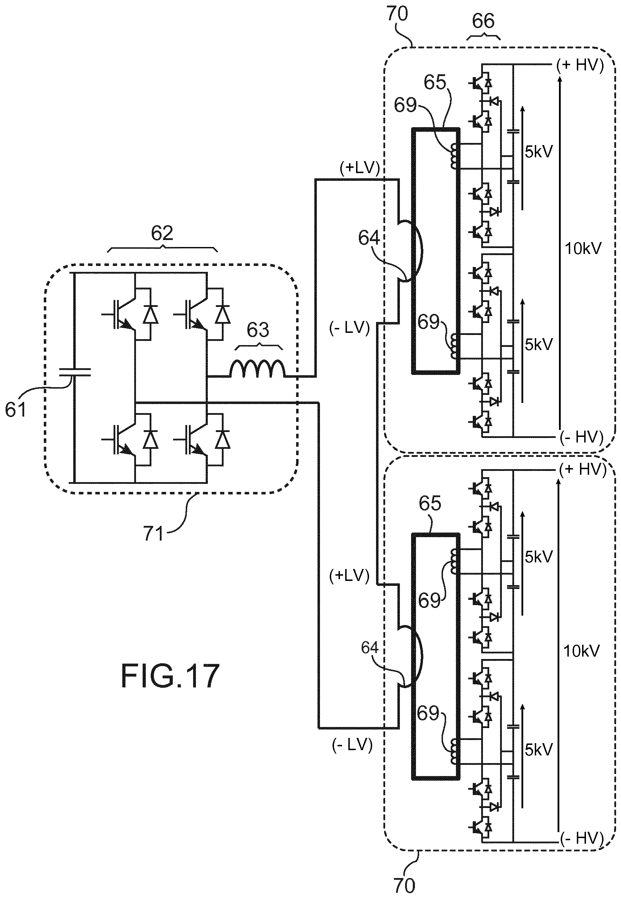

Un troisième exemple de réalisation, illustré sur la figure 17, comprend un convertisseur boost (« hacheur parallèle ») double pont déphaseur ZVS 62, un convertisseur pont complet 63, des convertisseurs 66 doubleur deux niveaux ou doubleur trois niveaux, avec deux noyaux, trois enroulements 64, 69 et 69 étant disposés autour de chacun ces noyaux 65.

### Références

[1] « Developing DC transmissions networks using DC-DC transformers » de D. Jovcic (Université d'Aberdeen, Octobre 2010, pages 1-6).
[2] « Requirements of DC-DC Converters to facilitate large DC grids » de C.D Barker, C.C Davidson, D.R. Trainer et R.S. Whitehouse (Alstom Grid UK Ltd), CIGRE 2012, pages 1-10).
[3] « Advanced Medium-Voltage bidirectional DC-DC converters systems for future electric energy delivery and management systems » de Haifeng Fan (Florida State University College of Engineering, 2011, chapitre 3).
[4] « High output voltage series parallel resonant DC/DC converter for medical X-ray imaging applications » de Fabiana da Silveira Cavalcante (Swiss Federal Institute of Technology, Zurich, 2006, chapitre 2) .
[5] « 1 Mégawatt, 20kHz, Isolated, Bidirectional 12kV to 1.2kV DC-DC Converter for Renewable Energy Applications » de G.Ortiz, J. Biela et J.W. Kolar (ETH Zurich, 2010 IEEE, pages 3212-3219).

## Revendications

1. Dispositif de conversion continu-continu réversible permettant un échange d'énergie entre deux réseaux électriques, à courant continu, qui est asymétrique et comporte plusieurs modules convertisseurs (40 ; 70) du côté haute tension, et un module convertisseur (41 ; 71) du côté basse tension comprenant une boucle de courant (50 ; 64) à plusieurs noyaux magnétiques (65), **caractérisé en ce qu'**il comprend, depuis le côté basse tension vers le côté haute tension :
- un condensateur d'entrée (61) relié aux bornes d'entrée d'un étage convertisseur (62) aux bornes de sortie duquel sont reliés en série un circuit LC résonant ou une inductance (63) et une boucle de courant (64), du côté basse tension ;
- plusieurs convertisseurs (70) côté haute tension comprenant chacun un noyau magnétique (65) traversé par la boucle de courant (50 ; 64), un enroulement secondaire (69) enroulé autour du noyau magnétique et relié aux bornes d'entrée d'un étage convertisseur (66), un ensemble condensateur (67) relié aux bornes de sortie de l'étage convertisseur.

2. Dispositif selon la revendication 1, qui est un dispositif élévateur, abaisseur ou bidirectionnel.

3. Dispositif selon la revendication 1, dans lequel chaque module convertisseur (41) du côté basse tension comprend un ou deux enroulements (49 ; 64) .

4. Dispositif selon la revendication 1, comprenant, du côté haute tension, des moyens de synchronisation des modules convertisseurs (40 ; 70) afin qu'ils commutent en même temps.

5. Dispositif selon la revendication 1, dans lequel chaque module convertisseur du côté haute tension comprend des convertisseurs travaillant en redresseur ou en onduleur.

6. Réseau électrique continu de transmission de quelques dizaines de kiloVolts comprenant au moins un dispositif selon l'une quelconque des revendications 1 à 5 permettant la distribution et la connexion d'un réseau continu basse tension.

7. Réseau électrique continu de transmission de quelques dizaines de kiloVolts comprenant au moins un dispositif selon l'une quelconque des revendications 1 à 5 permettant la connexion d'un stockage électrique de quelques centaines de Volts.

8. Procédé de conversion continu-continu réversible permettant un échange d'énergie entre deux réseaux électriques à courant continu mettant en oeuvre un dispositif selon l'une quelconque des revendications 1 à 5, dans lequel on utilise des gammes de courant élevé et de basse tension du côté basse tension et on utilise des gammes de courant faible et de haute tension du côté haute tension.

## Patentansprüche

1. Vorrichtung zur reversiblen DC-DC-Wandlung, die einen Energieaustausch zwischen zwei Gleichstromnetzen ermöglicht, die asymmetrisch ist und mehrere Wandlermodule (40; 70) auf der Hochspannungsseite und ein Wandlermodul (41; 71) auf der Niederspannungsseite aufweist, das eine Stromschleife (50; 64) mit mehreren Magnetkernen (65) umfasst,
**dadurch gekennzeichnet, dass** es von der Niederspannungsseite zur Hochspannungsseite Folgendes umfasst:
- einen Eingangskondensator (61), der mit den Eingangsanschlüssen einer Wandlerstufe (62) verbunden ist, an deren Ausgangsanschlüssen ein resonanter LC-Kreis oder eine Induktivität (63) und eine Stromschleife (64) auf der Niederspannungsseite in Reihe verbunden sind;
- mehrere Wandler (70) auf der Hochspannungsseite, jeweils einen Magnetkern (65) umfassend, durch den die Stromschleife (50; 64) verläuft, eine Sekundärwicklung (69), die um den Magnetkern gewickelt und mit den Eingangsanschlüssen einer Wandlerstufe (66) verbunden ist, eine Kondensatoranordnung (67), die mit den Ausgangsanschlüssen der Wandlerstufe verbunden ist.

2. Vorrichtung nach Anspruch 1, die eine Hebe-, Senk- oder bidirektionale Vorrichtung ist.

3. Vorrichtung nach Anspruch 1, wobei jedes Wandlermodul (41) auf der Niederspannungsseite eine oder zwei Wicklungen (49; 64) umfasst.

4. Vorrichtung nach Anspruch 1, auf der Hochspannungsseite Mittel zum Synchronisieren der Wandlermodule (40; 70) umfassend, sodass diese gleichzeitig schalten.

5. Vorrichtung nach Anspruch 1, wobei jedes Wandlermodul auf der Hochspannungsseite Wandler umfasst, die als Gleichrichter oder als Wechselrichter arbeiten.

6. Gleichstrom-Übertragungsnetz mit einigen zehntausend Kilovolt, das mindestens eine Vorrichtung nach einem der Ansprüche 1 bis 5 umfasst, die die Verteilung und den Anschluss eines Niederspannungs-Gleichstromnetzes ermöglicht.

7. Gleichstrom-Übertragungsnetz mit einigen zehntausend Kilovolt, das mindestens eine Vorrichtung nach einem der Ansprüche 1 bis 5 umfasst, die den Anschluss eines Stromspeichers mit einigen hundert Volt ermöglicht.

8. Verfahren zur reversiblen DC-DC-Wandlung, das einen Energieaustausch zwischen zwei Gleichstromnetzen ermöglicht, bei dem eine Vorrichtung nach einem der Ansprüche 1 bis 5 eingesetzt wird und wobei Hoch- und Niederspannungsstrombereiche auf der Niederspannungsseite verwendet werden und Nieder- und Hochspannungsstrombereiche auf der Hochspannungsseite verwendet werden.

## Claims

1. Device for reversible DC/DC conversion allowing an exchange of energy between two DC electric networks, which is asymmetric and comprises several converter modules (40; 70) on the high voltage side, and a converter module (41; 71) on the low voltage side comprising a current loop (50; 64) with several magnetic cores (65),
**characterised in that** it comprises, from the low voltage side to the high voltage side:
- an input capacitor (61) connected to the input terminals of a converter stage (62) at the output terminals from which are connected in series an LC resonating circuit or and inductance (63) and a current loop (64), on the low voltage side;
- several converters (70) on the high voltage side each comprising a magnetic core (65) passed through by the current loop (50; 64), a secondary winding (69) wound around the magnetic core and connected to the input terminals of a converter stage (66), a capacitor unit (67) connected to the output terminals of the converter stage.

2. Device according to claim 1, which is a raising, lowering or two-directional device.

3. Device according to claim 1, wherein each converter module (41) on the low voltage side comprises one or two windings (49; 64).

4. Device according to claim 1, comprising, on the high voltage side, means of synchronisation of the converter modules (40; 70) so that they switch at the same time.

5. Device according to claim 1, wherein each converter module on the high voltage side comprises converters that work as a rectifier or as an inverter.

6. DC electric network for transmitting a few tens of kiloVolts comprising at least one device according to any of claims 1 to 5 allowing for the distribution and the connection of a low voltage DC network.

7. DC electric network for transmitting a few tens of kiloVolts comprising at least one device according to any of claims 1 to 5 allowing for the connection of an electrical storage of a few hundred Volts.

8. Method for reversible DC/DC conversion allowing an exchange of energy between two DC electric networks implementing a device according to any of claims 1 to 5, wherein ranges of high current and low voltage are used on the low voltage side and ranges of low current and high voltage are used on the high voltage side.
